# EUROPEAN PATENT APPLICATION

(11) **EP 4 411 910 A1**
(43) Date of publication of application: **07.08.2024**
(21) Application number: 23839974.5
(22) Date of filing: 12.07.2023
(51) Int. Cl.: H01M 10/04, H01M 50/30, H01M 50/627, H01M 50/645, H01M 50/105, H01M 10/44, H01M 4/04

(54) **SECONDARY BATTERY MANUFACTURING METHOD, GAS DISCHARGE AND ELECTROLYTE INJECTION MECHANISM, AND SECONDARY BATTERY INCLUDING SAME**

(30) Priority: 14.07.2022 KR 20220086972
(71) Applicant: LG Energy Solution, Ltd., Seoul 07335 (KR)
(72) Inventor: LEE, Jin Soo, Daejeon 34122 (KR)
(74) Representative: Goddar, Heinz J.
(86) International application number: PCT/KR2023/009978
(87) International publication number: WO 2024/014883

(57) **Abstract**

The present technology provides a method of manufacturing a secondary battery, which may efficiently remove an activation process gas using a gas discharge pipe capable of performing both gas discharge and electrolyte injection and is simplified by simultaneously sealing the gas discharge pipe and sealing a battery case.

In addition, the present technology provides a method of manufacturing a secondary battery, which can reduce the number of sealing operations by injecting an electrolyte before an activation process using a gas discharge pipe with a double pipe structure including a gas discharge passage and an electrolyte injection passage.

In addition, the present technology provides a gas discharge and electrolyte injection device with a structure capable of performing both gas discharge and electrolyte injection, and a secondary battery including the same.

## Description

### [Technical Field]

The present invention relates to a method of manufacturing a secondary battery, and more specifically, to a method of manufacturing a secondary battery, which can reduce an area of a gas collection part by efficiently removing gas generated in a secondary battery in an activation process and simplify a process of installing a gas discharge pipe for gas discharge and electrolyte injection.

In addition, the present invention relates to a gas discharge and electrolyte injection device, which may effectively perform gas discharge from a secondary battery and electrolyte injection into the secondary battery, and a secondary battery including the same.

This application claims the benefit of priority based on Korean Patent Application No. 10-2022-0086972, filed on July 14, 2022, and the entire contents of the Korean patent application are incorporated herein by reference.

### [Background Art]

As prices of energy sources rises due to the depletion of fossil fuels and interest in environmental pollution increases, the demand for eco-friendly alternative energy sources is becoming an essential factor for future life, and in particular, as the development of technology and the demand for mobile devices increase, the demand for secondary batteries as an energy source is rapidly increasing.

In general, secondary batteries are broadly classified into cylindrical batteries, prismatic batteries, and pouch-shaped batteries depending on an exterior thereof and are also classified into lithium ion batteries, lithium ion polymer batteries, and lithium polymer batteries depending on the type of an electrolyte.

In addition, a secondary battery is manufactured by injecting an electrolyte, which is a liquid electrolyte, in a state in which an electrode assembly is stored in a battery case and sealing the battery case.

Among them, a method of manufacturing a pouch-type secondary battery includes a primary sealing operation of sealing an edge portion excluding one side of the battery case including a battery part in which the electrode assembly is accommodated and a gas collection part communicating with the battery part, an electrolyte injection operation of injecting an electrolyte into the battery part through the non-sealed one side of the battery case, a secondary sealing operation of completely sealing the one side of the battery part after injection, and then an activation process operation of performing charging/discharging and the like to give battery characteristics to the battery. The reason for forming the gas collection part in the battery case is to provide a space for collecting a large amount of activation gas because a large amount of activation gas is generated in the charging/discharging process for activating the secondary battery.

However, when a large amount of gas is generated, for example, when a manganese-based compound is used as an active material, it is necessary to design a larger gas collection part to accommodate this gas. This increased the amount of battery case material used, resulting in an increase in manufacturing costs.

In order to prevent the expansion of the gas collection part, a technology for discharging gas in an activation process by installing a gas discharge pipe in a battery case has been proposed. However, in this technology, after an electrolyte is injected into the battery case and the battery case is completely sealed, the sealed battery case is re-opened and re-sealed after the gas discharge pipe is inserted, thereby making the gas discharge pipe installation work very cumbersome. In addition, since damage to the battery case may occur in the process of opening the sealed battery case, even when the battery case is re-sealed, the battery case is not completely sealed due to the damaged area, and thus there is a risk of the occurrence of gas leakage and electrolyte leakage.

Meanwhile, since there is insufficient electrolyte in the battery during the activation process, it is necessary to replenish the electrolyte. Alternatively, even finished secondary batteries that have finished all battery manufacturing processes may also have an electrolyte exhausted during use. Therefore, it is necessary to replenish an electrolyte in semi-finished secondary batteries at an intermediate stage, which have performed activation, or finished secondary batteries. In addition, not only in the semi-finished secondary batteries in the activation stage, but also in the finished secondary batteries, depending on a usage environment, gas is rapidly generated inside the battery to increase an internal pressure of the battery case, and in severe cases, there is a risk of accidents such as explosion.

Therefore, in the semi-finished secondary batteries at the intermediate stage, which have undergone activation, and the finished secondary batteries, it is necessary to discharge the gas inside the battery case and at the same time, replenish the electrolyte.

However, conventionally, there was no technology capable of effectively performing gas discharge and electrolyte injection at the same time. For example, when gas discharge and electrolyte injection are performed simultaneously through the same passage of the gas discharge pipe, there was a concern that the electrolyte leaks through the passage during gas discharge. In addition, there was a possibility that an inside of the passage for gas discharge could be contaminated with an electrolyte to reduce gas discharge efficiency, or conversely, the electrolyte could be contaminated when the electrolyte is injected due to the contamination of the gas discharge passage.

Therefore, it is necessary to develop a technology capable of easily installing a gas discharge pipe for gas discharge in an activation process.

In addition, it is necessary to develop a technology capable of effectively performing gas discharge and electrolyte injection at the same time.

### [Related Art Document]

### [Patent Document]

Korean Patent Application Laid-Open No. 10-2018-0093792

### [Disclosure]

### [Technical Problem]

The present invention has been made to solve the above problems and is directed to providing a method of manufacturing a secondary battery, which may efficiently remove an activation process gas using a gas discharge pipe capable of performing both gas discharge and electrolyte injection.

In addition, the present invention is also directed to providing a method of manufacturing a secondary battery, which may simplify processes before and after an activation process using a gas discharge pipe with a double pipe structure including a gas discharge passage and an electrolyte injection passage and facilitate gas discharge and electrolyte injection.

In addition, the present invention is also directed to providing a gas discharge and electrolyte injection device with a structure capable of performing both gas discharge and electrolyte injection, and a secondary battery including the same.

### [Technical Solution]

A method of manufacturing a secondary battery according to the present invention for achieving the above objects includes accommodating an electrode assembly in a battery part of a battery case including the battery part and a gas collection part communicating with the battery part and sealing an edge portion of the battery case except for one side of the gas collection part, positioning a gas discharge pipe, through which both gas discharge and electrolyte injection are performed, in an open portion of the battery case at the one side, and simultaneously fixing the gas discharge pipe to the battery case and sealing the battery case by sealing the open portion and the gas discharge pipe together, and discharging gas generated inside a battery to an outside of the battery through the gas discharge pipe when an activation process is performed on the battery including the battery part and the gas collection part.

The method may further include injecting an electrolyte into the battery part through the open portion of the battery case at the one side after sealing the edge portion of the battery case except for the one side of the gas collection part.

A method of manufacturing a secondary battery according to another embodiment of the present invention includes accommodating an electrode assembly in a battery part of a battery case including the battery part and a gas collection part communicating with the battery part and positioning a gas discharge pipe with a double pipe structure including a gas discharge passage and an electrolyte injection passage at at least one open side of the gas collection part, simultaneously fixing the gas discharge pipe to the battery case and sealing the battery case by sealing the entire edge portion of the battery case including the open side, and discharging gas generated inside a battery to the outside of the battery through the gas discharge pipe when an activation process is performed on the battery including the battery part and the gas collection part.

The method may further include injecting an electrolyte into the battery part through an electrolyte injection passage of the gas discharge pipe after simultaneously fixing the gas discharge pipe to the battery case and sealing the battery case.

In addition, the method of manufacturing a secondary battery may include a degassing operation of discharging the remaining gas in the gas collection part to the outside of the battery through at least one of degassing holes formed in the gas collection part and the gas discharge pipe after the activation process.

In addition, the method of manufacturing a secondary battery may further include additionally replenishing an electrolyte in the battery through the gas discharge pipe in the activation process.

The gas discharge pipe may have a double pipe structure including a gas discharge passage and an electrolyte injection passage.

The gas discharge pipe may include a first stopper coupled to the gas discharge passage and a second stopper coupled to the electrolyte injection passage, and at least one operation of discharging gas from the battery and injecting an electrolyte into the battery may be performed by coupling and uncoupling at least one of the first stopper and the second stopper to and from each of the corresponding passages.

A gas discharge and electrolyte solution injection device according to the present invention includes a gas discharge pipe including a hollow first pipe formed with a gas discharge passage and having upper and lower open portions, a hollow second pipe formed with an electrolyte solution injection passage, having upper and lower open portions, and disposed in the gas discharge passage, and a connecting member connecting a pipe wall of the first pipe to a pipe wall of the second pipe, a first stopper detachably coupled to the upper open portion of the first pipe to seal the gas discharge passage, and a second stopper detachably coupled to the upper open portion of the second pipe to seal the electrolyte solution injection passage.

The connecting member may connect an inner circumferential surface of the first pipe to an outer circumferential surface of the second pipe and may be provided as a plurality of connecting members at predetermined intervals along circumferences of the first pipe and the second pipe.

The first stopper may include at least one of a sealing portion configured to cover an inlet of the gas discharge passage and an insertion portion inserted into the inlet.

The second stopper may include at least one of a sealing portion configured to cover an inlet of the electrolyte injection passage and an insertion portion inserted into the inlet.

The first stopper may include a sealing portion configured to cover an inlet of the gas discharge passage and an insertion portion inserted into the inlet, and a plurality of slots into which the connecting members are inserted may be formed at predetermined intervals along a circumference of the insertion portion.

The first stopper and the second stopper may be detachably coupled to each other. In this case, the first stopper may include a second stopper coupling through hole, and the second stopper may be inserted into the second stopper coupling through hole and coupled to the first stopper.

Threads engaging with each other may be formed on an outer surface of the second stopper and an inner surface of the second stopper coupling through hole, threads engaging with each other may be formed on a coupling surface of the first stopper and the corresponding coupling surface of the upper open portion of the first pipe, and threads engaging with each other may be formed on a coupling surface of the second stopper and the corresponding coupling surface of the upper open portion of the second pipe

An opening and closing mechanism configured to allow gas to flow toward only an inlet of the gas discharge passage may be installed inside the first pipe.

The opening and closing mechanism may include an upward movement restriction part and a downward movement restriction part formed to protrude at intervals up and down along the inner circumferential surface of the first pipe, and an opening and closing member positioned between the upward movement restriction part and the downward movement restriction part, and the opening and closing member may move between a blocking position at which the downward movement of gas is blocked by the opening and closing member coming into contact with the downward movement restriction part and an allowable position at which the opening and closing member is spaced apart from the downward movement restriction part by an upward pressure of the gas to allow the upward movement of the gas.

The opening and closing member may be a ring-shaped member including an outer circumferential surface in contact with the inner circumferential surface of the first pipe and an inner circumferential surface in contact with the outer circumferential surface of the second pipe.

A secondary battery according to the present invention includes an electrode assembly including a positive electrode, a negative electrode, and a separator disposed between the positive electrode and the negative electrode, a battery case including a battery part configured to accommodate the electrode assembly and a gas collection part communicating with the battery part, and the gas discharge and electrolyte injection device of embodiment herein installed at at least one side of the battery case, wherein the gas discharge and electrolyte injection device is installed in the battery case so that portions of the first pipe and the second pipe are inserted into the battery case and an inlet of the gas discharge passage and an inlet of the electrolyte injection passage protrude outward from one side of the battery case.

A secondary battery according to another embodiment of the present invention includes an electrode assembly including a positive electrode, a negative electrode, and a separator disposed between the positive electrode and the negative electrode, a battery case configured to accommodate the electrode assembly, and the gas discharge and electrolyte injection device of any embodiment herein installed at at least one side of the battery case, wherein the gas discharge and electrolyte injection device is installed in the battery case so that portions of the first pipe and the second pipe are inserted into the battery case and an inlet of the gas discharge passage and an inlet of the electrolyte injection passage protrude outward from one side of the battery case.

### [Advantageous Effects]

According to the present invention, it is possible to easily discharge gas to the outside of a battery without having to increase the area of a gas collection part even when a large amount of activation gas is generated.

In addition, according to the present invention, it is possible to easily install the gas discharge pipe for electrolyte injection and gas discharge in a battery case.

In addition, it is possible to reduce the number of sealing processes before an activation process using the gas discharge pipe with a double pipe structure including a gas discharge passage and an electrolyte injection passage.

In addition, it is possible to easily replenish an electrolyte when the electrolyte is exhausted, and at the same time, discharge the gas generated in the battery to the outside by a gas discharge and electrolyte injection device with the double pipe structure having the gas discharge pipe and including stoppers capable of opening and closing each pipe.

In addition, by separately performing a gas discharge process and an electrolyte injection process without interference by a structure in which the gas discharge passage and the electrolyte injection passage are separately provided, it is possible to prevent the corresponding passages from being contaminated by the gas or electrolyte.

### [Brief Description of the Drawings]

FIG. 1 is an exploded perspective view illustrating a process of manufacturing a secondary battery according to one embodiment of the present invention.
FIG. 2 is a flowchart of the method of manufacturing a secondary battery according to one embodiment of the present invention.
FIG. 3 is a cross-sectional view illustrating a state in which the secondary battery according to one embodiment of the present invention is sealed.
FIG. 4 is a schematic diagram illustrating the secondary battery according to one embodiment of the present invention.
FIG. 5 is a schematic diagram illustrating a degassing process of the secondary battery according to one embodiment of the present invention.
FIG. 6 is a flowchart of a method of manufacturing a secondary battery according to another embodiment of the present invention.
FIG. 7 is an exploded view of a gas discharge and electrolyte injection device according to one embodiment of the present invention.
FIG. 8 is a cross-sectional view of the gas discharge and electrolyte injection device according to one embodiment of the present invention.
FIG. 9 is a schematic diagram illustrating a gas discharge process by the gas discharge and electrolyte injection device according to one embodiment.
FIG. 10 is a cross-sectional view of a gas discharge and electrolyte injection device according to another embodiment of the present invention.
FIG. 11 is an exploded view of a gas discharge and electrolyte injection device according to still another embodiment of the present invention.
FIG. 12 is a cross-sectional view of the gas discharge and electrolyte injection device according to still another embodiment of the present invention.
FIG. 13 is a schematic diagram illustrating an electrolyte injection process by the gas discharge and electrolyte injection device according to still another embodiment.
FIG. 14 is a cross-sectional view of the gas discharge and electrolyte injection device according to another embodiment of the present invention.
FIG. 15 is a perspective view illustrating an opening and closing member of the gas discharge and electrolyte injection device.
FIG. 16 is a cross-sectional view illustrating an operating process of the gas discharge and electrolyte injection device according to another embodiment of the present invention.
FIG. 17 is a schematic diagram of a secondary battery according to another embodiment of the present invention.

### (DESCRIPTION OF REFERENCE NUMERALS)

- 100:: battery case
- 100A:: lower pouch
- 100B:: upper pouch
- 110:: battery part
- 110A:: battery part of lower pouch
- 110B:: battery part of upper pouch
- C:: accommodating space
- C1:: battery accommodating space of upper pouch
- C2:: battery accommodating space of lower pouch
- 120:: gas collection part
- 120A:: gas collection part of lower pouch
- 120B:: gas collection part of upper pouch
- 200:: electrode assembly
- 210:: jelly roll
- 221:: positive electrode tab
- 222:: positive electrode lead
- 223:: insulating part
- 231:: negative electrode tab
- 232:: negative electrode lead
- 233:: insulating part
- S 1:: primary sealing part
- S2:: secondary sealing part
- S3:: tertiary sealing part
- H1 to H4:: degassing holes
- 400, 400':: stoppers
- 410:: first stopper
- 411:: second stopper coupling through hole
- 420:: second stopper
- 500:: gas discharge pipe
- 510:: first pipe
- 511:: gas discharge passage
- 512:: upward movement restriction part
- 513:: downward movement restriction part
- 520:: second pipe
- 521:: electrolyte injection passage
- 540:: opening and closing member
- T, T1, T2, T3, T4:: gas discharge and electrolyte injection devices
- 600:: electrolyte injection pipe
- 1000, 2000:: secondary batteries

### [Detailed Description of Exemplary Embodiments]

Hereinafter, a detailed configuration of the present invention will be described in detail with reference to the accompanying drawings and several embodiments. The following embodiments are exemplarily described to help the understanding of the present invention, and in addition, the accompanying drawings are not drawn to actual scale, and dimensions of some components may be exaggerated to help the understanding of the present invention.

Since the present invention can be variously modified and may have various forms, specific embodiments will be illustrated in drawings and described in detail in the detailed description. However, it should be understood that this is not intended to limit the present invention to a specific disclosed form and includes all changes, equivalents, and substitutions included in the spirit and technical scope of the present invention.

A method of manufacturing a secondary battery according to one embodiment of the present invention includes accommodating an electrode assembly in a battery part of a battery case including the battery part and a gas collection part communicating with the battery part and sealing an edge portion of the battery case except for one side of the gas collection part, positioning a gas discharge pipe capable of performing both gas discharge and electrolyte injection in an open portion of the battery case at the one side and simultaneously fixing the gas discharge pipe to the battery case and sealing the battery case by sealing the open portion and the gas discharge pipe together, and discharging gas generated inside a battery to the outside of the battery through the gas discharge pipe when an activation process is performed on the battery including the battery part and the gas collection part.

A method of manufacturing a secondary battery according to another embodiment of the present invention includes accommodating an electrode assembly in a battery part of a battery case including the battery part and a gas collection part communicating with the battery part and positioning a gas discharge pipe with a double pipe structure including a gas discharge passage and an electrolyte injection passage at at least one open side of the gas collection part, simultaneously fixing the gas discharge pipe to the battery case and sealing the battery case by sealing the entire edge portion of the battery case including the open side, and discharging gas generated inside a battery to the outside of the battery through the gas discharge pipe when an activation process is performed on the battery including the battery part and the gas collection part.

A gas discharge and electrolyte injection device according to one embodiment of the present invention includes a gas discharge pipe including a hollow first pipe formed with a gas discharge passage and having upper and lower open portions, a hollow second pipe formed with an electrolyte injection passage, having upper and lower open portions, and disposed in the gas discharge passage, and a connecting member connecting a pipe wall of the first pipe to a pipe wall of the second pipe, a first stopper detachably coupled to the upper open portion of the first pipe to seal the gas discharge passage, and a second stopper detachably coupled to the upper open portion of the second pipe to seal the electrolyte injection passage.

A secondary battery according to one embodiment of the present invention includes an electrode assembly including a positive electrode, a negative electrode, and a separator disposed between the positive electrode and the negative electrode, a battery case including a battery part for accommodating the electrode assembly and a gas collection part communicating with the battery part, and the gas discharge and electrolyte injection device of any embodiment herein installed at at least one side of the battery case, and the gas discharge and electrolyte injection device is installed in the battery case so that portions of the first pipe and the second pipe are inserted into the battery case and an inlet of the gas discharge passage and an inlet of the electrolyte injection passage protrude outward from one side of the battery case.

A secondary battery according to another embodiment of the present invention includes an electrode assembly including a positive electrode, a negative electrode, and a separator disposed between the positive electrode and the negative electrode, a battery case for accommodating the electrode assembly, and the gas discharge and electrolyte injection device of any embodiment herein installed at at least one side of the battery case, and the gas discharge and electrolyte injection device is installed in the battery case so that portions of the first pipe and the second pipe are inserted into the battery case and an inlet of the gas discharge passage and an inlet of the electrolyte injection passage protrude outward from one side of the battery case.

### Forms for practicing the invention

### [Method of manufacturing secondary battery]

### (First embodiment)

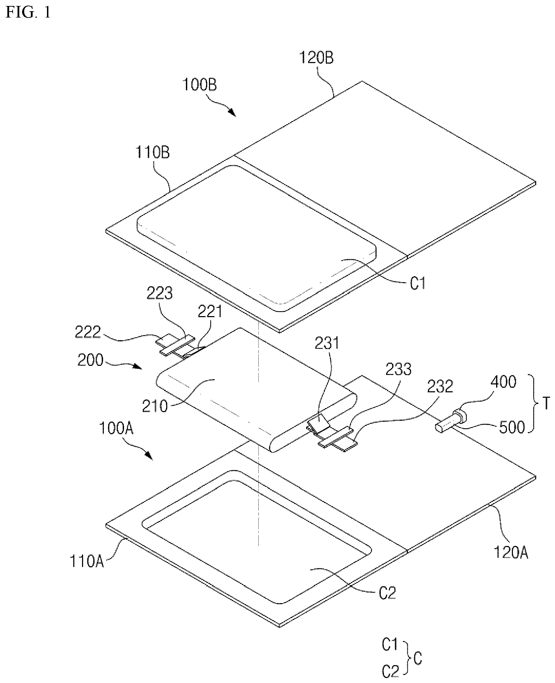

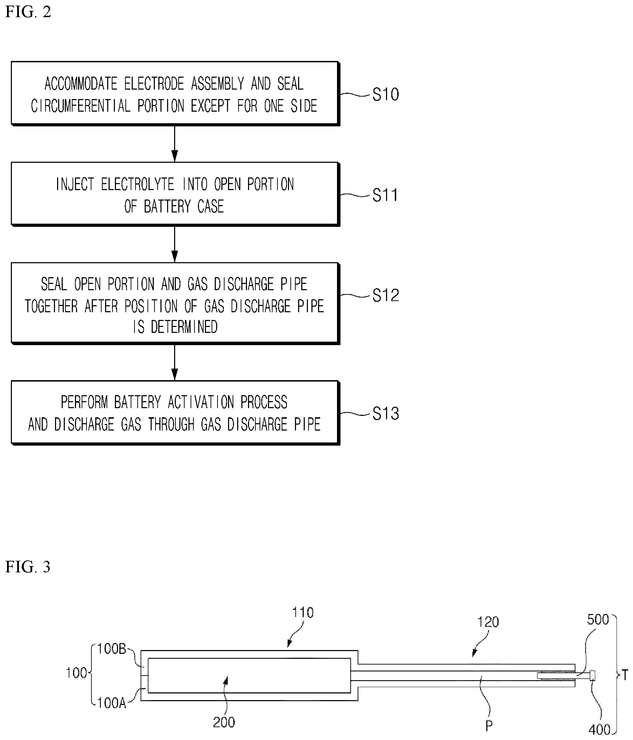

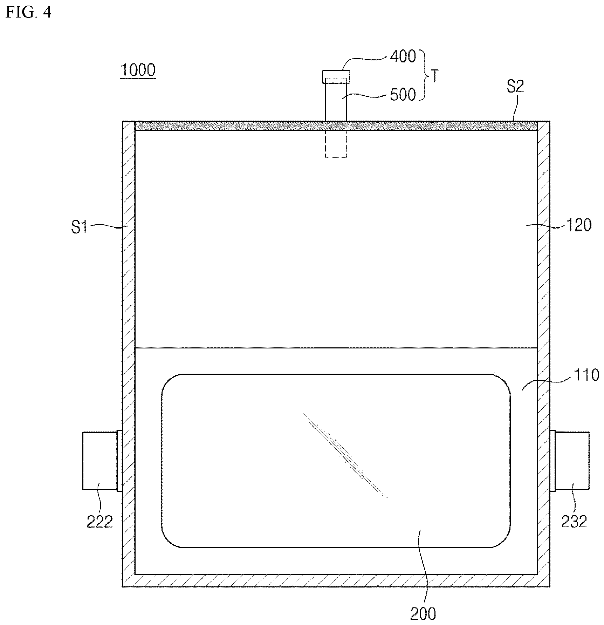

FIG. 1 is an exploded perspective view illustrating a process of manufacturing a secondary battery according to one embodiment of the present invention, FIG. 2 is a flowchart of the method of manufacturing a secondary battery according to one embodiment of the present invention, FIG. 3 is a cross-sectional view illustrating a state in which the secondary battery according to one embodiment of the present invention is sealed, and FIG. 4 is a schematic diagram illustrating the secondary battery according to one embodiment of the present invention.

The method of manufacturing a secondary battery according to one embodiment of the present invention includes a primary sealing operation of accommodating an electrode assembly 200 in a battery case 100 and sealing a portion of an edge portion of the battery case 100, a secondary sealing operation of sealing a gas discharge pipe and the battery case 100 together, and an activation and gas discharge operation.

The concept of the electrode assembly 200 includes all electrode stacks including at least one positive electrode, at least one negative electrode, and at least one separator, and a shape and the like thereof is not particularly limited. For example, the electrode assembly 200 may have a j elly-roll shape in which a strip-shaped positive electrode and negative electrode are disposed with a separator interposed therebetween and are wound, but is not limited thereto, and other types of electrode assemblies 200 may also be applied to the present invention.

Materials of the positive electrode, the negative electrode, and the separator included in the electrode assembly 200 are not particularly limited, and materials known in the art may be used without particular limitation.

As illustrated in FIG. 1, the electrode assembly 200 includes electrode tabs (a positive electrode tab 221 and a negative electrode tab 231) protruding from the jelly roll-shaped electrode assembly 210. The electrode tabs is connected to each of the positive electrode and the negative electrode of the electrode assembly 200 and protrudes to the outside of the electrode assembly 200. Electrode leads (a positive electrode lead 222 and a negative electrode lead 232) are connected to the electrode tabs by welding or the like. In addition, insulating parts 223 and 233 are coupled by surrounding portions of the electrode leads. The insulating part prevents electricity generated in the electrode assembly 200 from flowing into the battery case 100 through the electrode lead and maintains the sealing of the battery case 100.

The electrode leads may extend in the same direction depending on the positions where the positive electrode tab 221 and the negative electrode tab 231 are formed or extend in opposite directions as in the example of FIG. 1.

The battery case 100 may form the overall exterior of the secondary battery and may be a pouch made of a flexible material. The battery case 100 includes a gas barrier layer, a surface protection layer, and a sealant layer. The gas barrier layer is intended to block the entry and exit of a gas and contains a metal, and for example, aluminum foil may be used. The surface protection layer may be positioned on an outermost layer of the battery case 100 and may be made of a wear-resistant and heat-resistant polymer such as nylon resin or PET. The sealant layer may be positioned at an innermost side thereof, and a polymer such as polypropylene (PP) may be used.

The pouch-type battery case 100 is manufactured by processing a film in which the layers are stacked into a pouch shape. Specifically, the battery case 100 is sealed by bringing an upper pouch 100B and a lower pouch 100A into contact with each other and bonding the sealant layers by applying heat-pressing to edge portions thereof. Alternatively, sealing using ultrasonic waves, a laser, or the like is possible.

The upper pouch 100B and the lower pouch 100A are each provided with an accommodating space C for accommodating the electrode assembly 200. Referring to FIG. 1, a cup-shaped accommodating space C is formed in each of facing portions of the upper and lower pouches. When the electrode assembly 200 is accommodated in any one of an accommodating space C1 of the upper pouch 100B and an accommodating space C2 of the lower pouch 100A and the other accommodating space covers the electrode assembly 200, the electrode assembly 200 is accommodated in the battery case 100 by being surrounded by the accommodating spaces C of the upper and lower pouches 100B and 100A as illustrated in FIG. 3. A portion of the battery case 100 in which the electrode assembly 200 is accommodated will be referred to as a battery part 110. In other words, the battery part 110 is formed by coupling a battery part 110B in which the accommodating space C1 of the upper pouch 100B is formed to a battery part 110A in which the accommodating space C2 of the lower pouch 100A is formed. In the present embodiment, a so-called double cup-shaped battery case in which the upper pouch 100B and the lower pouch 100A are each processed to have a concave accommodating space is provided. However, only one of the upper and lower pouches 100B and 100A may have the cup-shaped accommodating space C, and the other may also be applied to a single cup-shaped battery case 100 that covers the accommodating space.

In addition, in FIG. 1, although the upper pouch 100B and the lower pouch 100A are illustrated as being provided separately, the battery case 100 may be manufactured by connecting the upper and lower pouches 100B and 100A at one ends thereof and folding and coupling the upper and lower pouches 100B and 100A based on the one ends.

In addition, the battery case 100 illustrated in FIG. 4 is in the form of the battery case of a semi-finished secondary battery at an intermediate stage, which is provided to the activation process, rather than the battery case 100 of a finished secondary battery. Since initial cells of the secondary battery are cells in a non-activated discharged state, the cells may not function as a battery. The activation process is a process of activating the cells to function as a battery by charging and discharging the cells in the discharged state several times. Since the charging and discharging process is performed by an electrochemical reaction, gas is generated by a side reaction. Since the gas causes increased cell resistance, a reduced capacity and lifespan, a poor exterior, or the like, a degassing process for removing the gas is performed after the charging and discharging process is performed.

A gas collection part 120 is provided in the battery case to collect the gas generated in the activation process. In other words, as illustrated in FIG. 1, the upper pouch 100B and the lower pouch 100A include gas collection parts 120B and 120A, respectively, provided at one sides of the battery parts 110B and 110A, and the gas collection part 120 is formed by coupling the gas collection parts 120B and 120A of the upper and lower pouches 100B and 100A. Referring to FIG. 3, it is illustrated that a gas collection part 120 communicating with the battery part 110 at one side of the battery part 110 is provided in the battery case 100.

However, depending on an active material or manufacturing conditions, a large amount of gas may be generated in the activation process. When a large amount of gas is generated, there is a risk that the gas collection part 120 ruptures due to an increase in internal pressure of the gas collection part 120. Therefore, in the case of a battery in which a large amount of gas is generated, a method of designing a larger gas collection part 120 or increasing a volume of the gas collection part 120 by molding the gas collection part 120 is used. However, as a size of the gas collection part 120 increases, the amount of battery case material used is increased, thereby increasing manufacturing costs. In addition, molding the gas collection part 120 has caused an increase in manufacturing costs due to the increased number of processes. In addition, even when the size of the gas collection part 120 is increased, there is a limitation to collecting all the gas continuously generated in the activation process.

In order to solve this problem, according to the present invention, a gas discharge pipe 500 through which the gas may be discharged is installed in the gas collection part 120. In addition, by positioning the gas discharge pipe 500 in the battery case 100 before the secondary sealing of the battery case 100 and sealing the gas discharge pipe 500 and the battery case 100 together during the secondary sealing, it is possible to easily perform both the fixing and sealing operations of the gas discharge pipe 500 at one time.

The method of manufacturing a secondary battery according to one embodiment of the present invention illustrated in FIG. 2 includes accommodating the electrode assembly 200 in the battery part 110 of the battery case 100 including the battery part 110 and the gas collection part 120 communicating with the battery part 110 and sealing the edge portion of the battery case 100 except for one side of the gas collection part 120 (S10). In other words, as illustrated in FIG. 1, the electrode assembly 200 is accommodated in the electrode assembly 200 accommodating spaces of the upper pouch 100B and the lower pouch 100A, the upper and lower pouches 100B and 100A are brought into close contact with each other, and then the edge portion of the battery case 100 is sealed. In other words, as illustrated in FIG. 4, for example, primary sealing that seals the remaining edge portion of the battery case 100 except for only one side at an upper side of the gas collection part 120 using a sealing tool is performed. Symbol S 1 denotes a primary sealing part. It is preferable to remove the air inside the battery case 100 before sealing and seal the edge portion.

By positioning the gas discharge pipe 500 capable of both gas discharge and electrolyte injection in an open portion of the battery case at the one side and sealing the open portion and the gas discharge pipe 500 together, the fixing of the gas discharge pipe to the battery case 100 500 and the sealing of the battery case 100 may be simultaneously performed (S12).

The gas discharge pipe 500 is installed in the gas collection part 120 and is a pipe for discharging the activation process gas to the outside of the battery. A diameter of the gas discharge pipe 500 is not particularly limited, but may be selected in an appropriate range in consideration of the size of the battery, a flow rate of the generated gas, a gas discharge rate, and the like. In addition, the gas discharge pipe 500 may be made of a material with strong corrosion resistance, for example, Teflon, but is not limited thereto.

As the gas discharge pipe 500, a gas discharge pipe capable of performing both gas discharge and electrolyte injection may be used. For example, by applying a gas discharge pipe 500 with one hollow passage, gas discharge may be performed through the hollow passage. In addition, an electrolyte may be injected from the outside of the battery into the battery through the hollow passage, if necessary.

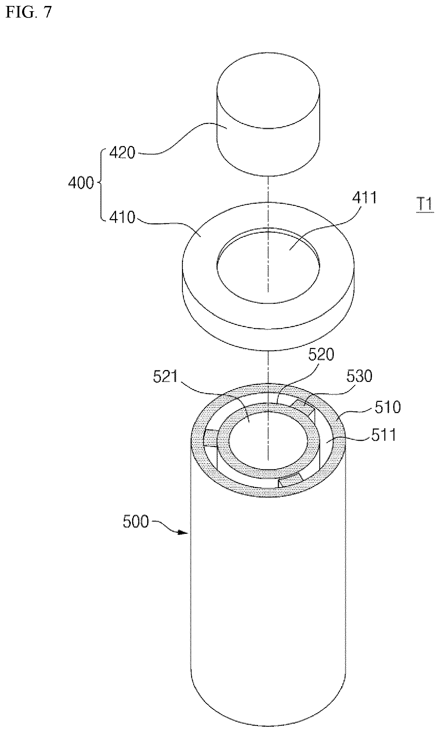

Alternatively, a gas discharge pipe 500 with a double pipe structure including both a gas discharge passage and an electrolyte injection passage may be used. As described above, by providing separate passages for gas discharge and electrolyte injection, it is possible to prevent interference between processes and contamination of the passages, which may occur when gas discharge and electrolyte injection are performed simultaneously through one passage. As the gas discharge pipe 500 with the double pipe structure, a gas discharge pipe 500 of the same type as illustrated in FIGS. 7 to 16 may be used, which will be described below.

In operation S12, as illustrated in FIG. 3, the gas discharge pipe 500 is positioned in the open portion (opening) of the battery case between facing inner surfaces of the upper and lower pouches, and the open portion and the gas discharge pipe 500 are sealed together.

In order to discharge gas, at least an inlet portion of the gas discharge pipe 500 is positioned in the open portion to protrude out of the battery. In addition, a portion of the gas discharge pipe 500 is positioned inside a gas pocket part rather than the sealed area so that the gas in the gas collection part 120 easily flows into the gas discharge pipe 500. As illustrated, the gas discharge pipe 500 may be positioned in the open portion at the upper side of the gas collection part 120, but may be positioned at at least one side of both sides of the gas pocket part corresponding to a side from which the electrode lead protrudes. However, when considering the nature of the gas flowing upward and a liquid injection direction, as illustrated in FIGS. 3 and 4, it is preferable to install the gas discharge pipe 500 at the upper side of the gas collection part 120.

As the gas discharge pipe 500, a pipe with a circular cross-section may be adopted, but the present invention is not limited thereto. For example, a pipe with an elliptical cross section or a polygonal cross section with curved R portions at corners may also be applied.

After arranging the gas discharge pipe 500 in the open portion of the battery case, the one side of the gas collection part 120 and the gas discharge pipe 500 are sealed together (secondary sealing). Symbol S2 denotes a secondary sealing part. In this case, a vacuum sealing method of sealing the gas discharge pipe 500 and the upper and lower pouches in a vacuum atmosphere so that there is no gap between the gas discharge pipe 500 and the upper and lower pouches may be applied. The vacuum sealing method may be applied to the primary sealing and may also be applied to third sealing after trimming the battery case, which will be described below. The sealing may be performed by thermal fusion and/or a fusion method using ultrasonic waves or a laser. By vacuum sealing, the facing inner surfaces of the upper and lower pouches of the open portion are bonded in close contact with each other, and at the same time, the upper and lower pouches 100B and 100A surrounding the gas discharge pipe 500 are bonded in close contact with each other. Therefore, the gas discharge pipe 500 is reliably fixed to the battery case and at the same time, the sealing of the battery case 100 is achieved. As described above, according to the manufacturing method of the present invention, before the battery case 100 is completely sealed, the gas discharge pipe 500 is positioned in the open portion of the battery case 100, and the fixing of the gas discharge pipe 500 and the sealing of the battery case 100 are performed simultaneously. Therefore, there is no need for separate installation work such as inserting the gas discharge pipe 500 into the battery case 100. Therefore, it is possible to simplify the process and tightly and reliably fix the gas discharge pipe 500 to the battery case 100. Therefore, it is possible to prevent the gas or electrolyte from leaking through a gap between the gas discharge pipe 500 and the battery case 100.

FIG. 4 illustrates a secondary battery in a state in which the secondary sealing has been performed.

An activation process is performed by charging and discharging the battery including the battery part 110 and the gas collection part 120. In the activation process, gas is generated in the battery part 110 due to chemical reactions and side reactions due to charging and discharging, and this gas is collected after moving to the gas collection part 120.

Since the secondary battery according to the present invention includes the gas discharge pipe 500 installed in the battery case 100, the gas generated while performing the activation process may be discharged to the outside through the gas discharge pipe 500. In other words, the present invention includes discharging the gas generated in the activation process and flowing into the gas collection part 120 to the outside of the battery through the gas discharge pipe 500 (S13).

Meanwhile, it is preferable that electrolyte injection be performed only before the activation process. For example, the electrolyte may be injected through the open portion of the battery case at the one side between operations S10 and S12, and the electrolyte may be injected through the gas discharge pipe fixed to the battery case between operations S12 and S13.

As an example of the former, operation S11 may be provided between operations S10 and S12. In operation S11, the electrolyte may be injected into the battery part 110 through the open portion of the battery case formed at the one side. Since the one side at the upper side is not sealed, the opening is formed between the facing inner surfaces of the upper and lower pouches. Therefore, the electrolyte may be injected into the gas collection part 120 through the opening. The electrolyte injection process is a process of impregnating the electrode assembly 200 accommodated in the battery part 110 with the electrolyte. The electrolyte penetrates between the positive electrode, the negative electrode, and the separator of the electrode assembly 200 by a capillary force.

In the activation process, since charging is performed while a body of the secondary battery is pressed by a flat plate, the gas is not locally collected in the battery and moves uniformly to the gas collection part 120. In the present invention, since the gas discharge pipe 500 is provided, the gas in the battery may be easily discharged to the outside according to the pressing. In addition, when negative pressure (vacuum) is generated outside the battery, the gas may be discharged more quickly through the gas discharge pipe 500.

As described above, according to the method of manufacturing a secondary battery according to the present invention, the gas discharge pipe 500 may be easily and firmly installed in the battery case 100. In addition, since the gas generated in the activation process may be quickly discharged by the gas discharge pipe 500, it is possible to reduce the amount of remaining gas in the battery, thereby resolving the risk of ignition and explosion while the battery is manufactured. In addition, since the gas discharge pipe 500 quickly discharges the gas, it is possible to reduce a capacity or size of the gas pocket part, thereby reducing a dead space of the battery and reducing the amount of material used.

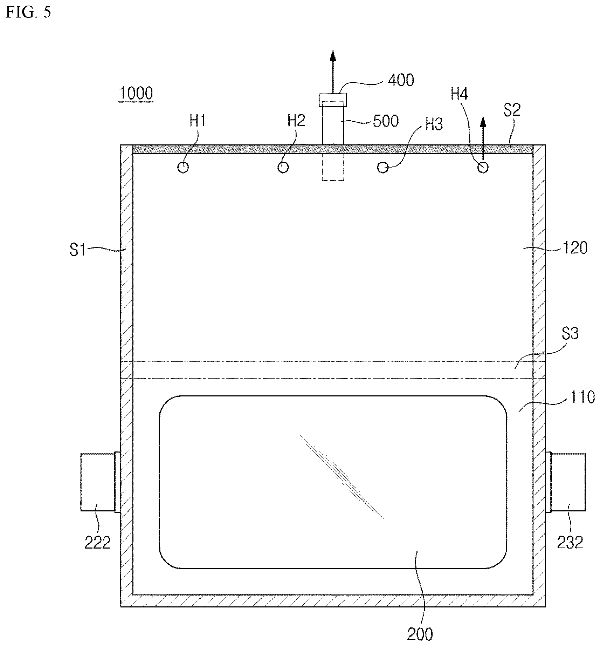

FIG. 5 is a schematic diagram illustrating a degassing process of the secondary battery according to one embodiment of the present invention.

In order to discharge the remaining gas in the gas collection part 120 after the activation process is finished and manufacture a finished battery, as illustrated in FIG. 5, degassing holes H1 to H4 are formed in the gas collection part 120. The gas is discharged from the inside to the outside of the battery case 100 through the degassing holes H1 to H4. The gas discharge pipe 500 according to the present invention may discharge the gas even in this degassing operation. In other words, after the activation process, the remaining gas in the gas collection part 120 may be discharged to the outside of the battery through at least one of the degassing holes H1 to H4 formed in the gas collection part 120 and the gas discharge pipe 500. For example, even when the degassing holes are not formed, the remaining gas may be discharged to the outside of the battery through the gas discharge pipe 500. When the degassing holes H1 to H4 are drilled into the gas collection part 120, the gas may be discharged through the degassing holes. In this case, the remaining gas may be discharged more quickly by opening the stopper of the gas discharge pipe 500.

Meanwhile, even in the degassing operation, it is possible to easily discharge the gas through the degassing holes H1 to H4 or the gas discharge pipe 500 by forming a vacuum environment outside the battery, such as placing the battery in a vacuum chamber. In addition, by pressing both side surfaces of the battery in the degassing operation, the gas may be discharged quickly. In any case, the remaining gas in the gas collection part 120 may be efficiently discharged by the gas discharge pipe 500 according to the present invention.

There is an advantage in that gas discharge through the gas discharge pipe 500 may be performed repeatedly. In other words, whenever a large amount of gas is collected in the gas collection part 120 during the activation process or during degassing, the gas may be repeatedly discharged, for example, by opening a stopper 400 of the gas discharge pipe 500.

In addition, the method of manufacturing a secondary battery according to the present invention may further include additionally replenishing an electrolyte in the battery through the gas discharge pipe 500 in the activation process. As described above, the gas discharge passage of the gas discharge pipe 500 may also be used as an electrolyte injection passage. Therefore, when the electrolyte in the battery becomes insufficient in the activation process, the electrolyte in the battery may be replenished by injecting the electrolyte through the gas discharge pipe 500. In this case, since the gas in the battery is discharged through the gas discharge pipe 500 to reduce the pressure in the battery, the electrolyte may be additionally replenished at any time in the activation process by replacing the gas.

In order to avoid interference during gas discharge and electrolyte injection and prevent passage contamination, the gas discharge pipe 500 may have a double pipe structure including a gas discharge passage and an electrolyte injection passage. As will be described below, as illustrated in FIGS. 7 to 16, the gas discharge pipe 500 may be formed as a double pipe in which the electrolyte injection passage and the gas discharge passage are disposed concentrically. When gas discharge and electrolyte injection are performed through the gas discharge pipe 500 with this structure, each of the two operations may be performed efficiently while avoiding interference such as contamination of each passage or leakage of the electrolyte during gas discharge.

In addition, the gas discharge pipe 500 with this double pipe structure may include a first stopper coupled to the gas discharge passage and a second stopper coupled to the electrolyte injection passage. In this case, by coupling and uncoupling at least one of the first stopper and the second stopper to and from each of the corresponding passages, at least one operation of discharging gas from the battery and injecting the electrolyte into the battery may be performed. For example, when gas discharge and electrolyte injection are not required in operations before and after the activation process, each passage may be closed by coupling the first stopper to the gas discharge passage and coupling the second stopper to the electrolyte injection passage. When any one of the gas discharge and the electrolyte injection is performed, the corresponding operation may be performed by uncoupling one of the first stopper and the second stopper from the corresponding passage. In addition, when both the first and second stoppers are uncoupled, gas discharge and electrolyte injection may be performed simultaneously.

In this case, the gas discharge pipe 500 and the first and second stoppers form a gas discharge and electrolyte injection device T. Examples of this device will be described below.

In addition, as described above, by providing a stopper corresponding to each passage, it is possible to block the introduction of outside air or moisture. The first and second stoppers may have shapes that match shapes of the corresponding passages. For example, the first and second stoppers may be formed as wedge-shaped press-fitting sealing stoppers fitted into the gas discharge passage and the electrolyte injection passage. Alternatively, by forming a thread on the corresponding coupling surfaces of each passage and the stopper, each stopper may be coupled to each passage by screw-coupling.

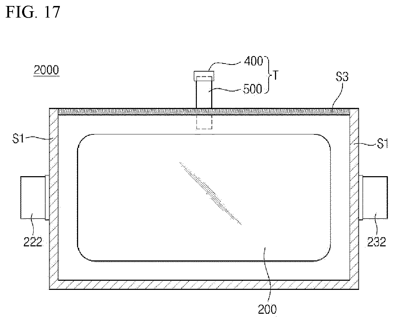

When the degassing operation is finished, a finally finished secondary battery is manufactured by removing the gas collection part 120 and sealing (tertiary sealing) the removed portion. In other words, in FIG. 5, a connecting portion between the gas collection part 120 and the battery part 110 is cut, the cut portion is trimmed, and then tertiary sealing is performed. Symbol S3 denotes a scheduled tertiary sealing part (see FIG. 5) or a tertiary sealing part (see FIG. 17). By removing the gas collection part 120, the gas discharge pipe 500 provided in the gas collection part 120 is also removed.

### (Second embodiment)

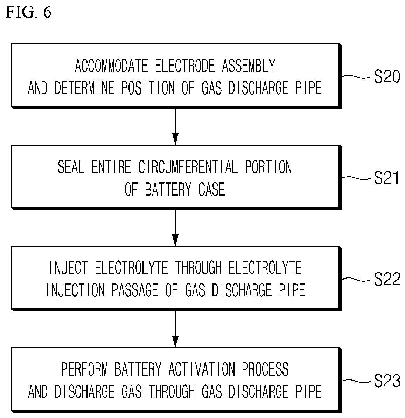

FIG. 6 is a flowchart of a method of manufacturing a secondary battery according to another embodiment of the present invention.

The manufacturing method of the present embodiment adopts a gas discharge pipe 500 with a double pipe structure including a gas discharge passage and an electrolyte injection passage as the gas discharge pipe 500 and can reduce the number of times of sealing the battery case.

Referring to FIG. 6, the method of manufacturing a secondary battery according to the present embodiment includes accommodating an electrode assembly 200 in a battery part 110 of a battery case 100 including the battery part 110 and a gas collection part 120 communicating with the battery part 110 and positioning a gas discharge pipe 500 with a double pipe structure including a gas discharge passage and an electrolyte injection passage at at least one open side of the gas collection part 120 (S20). In other words, as in the first embodiment, the battery part 110 is formed by bringing battery parts 110A and 110B in which the electrode assembly accommodating spaces of the upper and lower pouches are formed into contact with each other so that the electrode assembly 200 is accommodated in the electrode assembly accommodating spaces of the battery part 110. In addition, the gas collection part 120A and 120B of the upper and lower pouches communicating with the battery part 110 are positioned to face each other, and as illustrated in FIG. 1, the gas discharge pipe 500 with the double pipe structure is positioned in the open portion between the gas collection parts of the upper and lower pouches, that is, one open side of the gas collection part 120.

Next, in operation S21, the entire edge portion of the battery case 100 including the open side is sealed. In other words, rather than performing primary sealing on the battery case 100 except for the one side and performing secondary sealing on the battery case 100 along with the gas discharge pipe 500 as in the first embodiment, the gas discharge pipe 500 and the battery case 100 are sealed simultaneously in the primary sealing operation. Therefore, by this sealing, the gas discharge pipe 500 is fixed to the battery case 100, and the entire edge portion of the battery case 100 is sealed. Since the specific sealing method such as vacuum sealing may be performed in the same manner as the first embodiment, detailed description thereof will be omitted.

The activation process may be performed by charging and discharging the battery including the battery part 110 and the gas collection part 120. In the activation process, gas is generated in the battery part 110 due to chemical reactions and side reactions due to charging and discharging, and this gas is collected after moving to the gas collection part 120. The gas generated in the activation process and flowing into the gas collection part 120 is discharged to the outside of the battery through the gas discharge pipe 500 (S23).

Meanwhile, the method may further include, before the activation process, injecting an electrolyte into the battery part 110 through the electrolyte injection passage of the gas discharge pipe 500 (S22). For example, the stopper coupled to the electrolyte injection passage of the gas discharge pipe 500 may be removed, and the electrolyte injection pipe of an electrolyte injection device may be connected to the electrolyte injection passage to inject the electrolyte. Therefore, the electrolyte may be impregnated into the electrode assembly 200 of the battery part 110 through the electrolyte injection passage.

By sealing the gas discharge pipe 500 along with the battery case 100 using the manufacturing method of the present embodiment, the gas discharge pipe 500 may be easily and firmly installed in the battery case 100. In addition, since the gas generated in the activation process may be quickly discharged by the gas discharge pipe 500, it is possible to reduce the remaining gas in the battery, thereby reducing the capacity or size of the gas pocket part.

In addition, electrolyte injection may be performed through the electrolyte injection passage of the gas discharge pipe 500. Therefore, there is an additional advantage in that the number of processes is reduced because one sealing process is required before the activation process. In other words, in the present embodiment, a secondary battery 1000 with the same form as that of FIG. 4 may be obtained only by performing operations S20 and S21.

The method of manufacturing a secondary battery according to the present embodiment may also include, after the activation process, a degassing operation of discharging the remaining gas in the gas collection part 120 to the outside of the battery through at least one of the degassing holes H1 to H4 formed in the gas collection part 120 and the gas discharge pipe 500.

In addition, in the activation process, an electrolyte may be additionally replenished in the battery through the gas discharge pipe 500. In other words, not only the electrolyte injection for impregnation of the electrode assembly may be performed before the activation process, but also the electrolyte may be replenished in the activation process by the gas discharge pipe 500 of the present embodiment.

Even in the present embodiment, a first stopper coupled to the gas discharge passage and a second stopper coupled to the electrolyte injection passage may be provided, and by coupling and uncoupling at least one of the first stopper and the second stopper to and from each of the corresponding passages, at least one operation of discharging gas from the battery and injecting the electrolyte into the battery may be performed.

When the degassing operation is finished, a finally finished secondary battery is manufactured by removing the gas collection part 120 and sealing (secondary sealing) the removed area. In other words, in FIG. 5, a connecting portion between the gas collection part 120 and the battery part 110 is cut, the cut portion is trimmed, and then secondary sealing is performed. By removing the gas collection part 120, the gas discharge pipe 500 provided in the gas collection part 120 is also removed.

According to the present embodiment, since a total of two sealing operations may be performed before and after the activation process, it is possible to obtain a finished secondary battery while reducing the number of manufacturing processes.

### [Gas discharge and electrolyte injection device]

### (First embodiment)

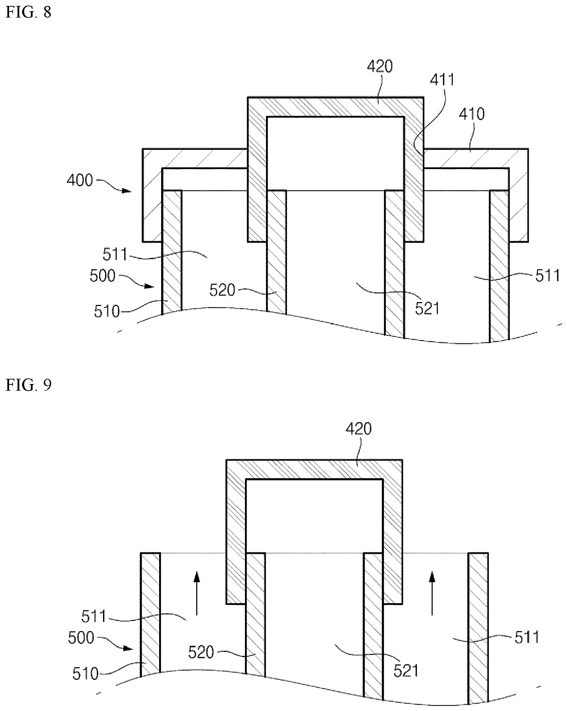

FIG. 7 is an exploded view of a gas discharge and electrolyte injection device according to one embodiment of the present invention, FIG. 8 is a cross-sectional view of the gas discharge and electrolyte injection device according to one embodiment of the present invention, and FIG. 9 is a schematic diagram illustrating a gas discharge process by the gas discharge and electrolyte injection device according to one embodiment.

The present invention also includes a gas discharge and electrolyte injection device applicable to the above-described secondary battery manufacturing method. Therefore, it is possible to effectively discharge gas and inject an electrolyte from and into a semi-finished secondary battery at the intermediate stage, which includes a gas pocket part, or a finished secondary battery.

The gas discharge and electrolyte injection device T1 according to the present embodiment includes a gas discharge pipe 500, a first stopper 410, and a second stopper 420.

The gas discharge pipe 500 includes a hollow first pipe 510 formed with a gas discharge passage 511 and having upper and lower open portions, a hollow second pipe 520 formed with an electrolyte injection passage 521, having upper and lower open portions, and disposed in the gas discharge passage 511, and a connecting member 530 connecting a pipe wall of the first pipe 510 to a pipe wall of the second pipe 520. The gas discharge pipe 500 has a double pipe structure in which two pipes are formed in a hollow space. In addition, the upper portion and the lower portion of the gas discharge pipe 500 are open. The upper open portion of the gas discharge pipe 500 may be closed by being coupled to the stopper 400. The lower open portion of the gas discharge pipe 500 may be inserted into the secondary battery so that the gas inside the battery may flow into the open portion of the lower portion of the gas discharge pipe. Alternatively, an electrolyte injected from the outside may be injected into the battery through the open portion of the lower portion.

The first pipe 510 and the second pipe 520 may be disposed concentrically, but are not limited thereto, and the second pipe 520 may be disposed eccentrically inside the first pipe 510, if necessary. In addition, the first pipe 510 and the second pipe 520 have circular cross sections, but are not limited thereto, and may also be pipes having an elliptical or polygonal cross-section with curved R portions. As described above, the gas discharge pipe 500 may be made of a material with strong corrosion resistance to withstand the electrolyte or the gas vaporized from the electrolyte. In addition, materials of the first pipe 510 and the second pipe 520 may be the same or different.

A length of the gas discharge pipe 500 may be determined in consideration of a size of the secondary battery, an installation space of an external device in which the secondary battery is installed, and the like, and is not particularly limited.

The first pipe 510 and the second pipe 520 are connected by the connecting member 530. In other words, the pipe wall of the first pipe 510 and the pipe wall of the second pipe 520 may be connected by the connecting member 530. Referring to FIG. 7, the connecting member 530 connecting an inner circumferential surface of the first pipe 510 to an outer circumferential surface of the second pipe 520 is provided as a plurality of connecting members (three in the present embodiment) at predetermined intervals along circumferences of the first pipe 510 and the second pipe 520. In the first pipe 510, a space between the connecting members 530 becomes the gas discharge passage 511. The number and shapes of connecting members 530 may be determined in consideration of the coupling rigidity of the first and second pipes, gas discharge efficiency, and the like.

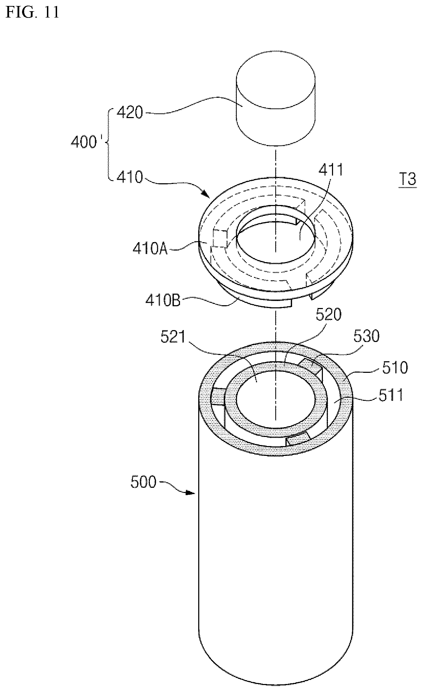

The connecting member 530 may be installed near an inlet portion of the first pipe 510. However, when the first stopper 410 includes an insertion portion that is inserted by being fitted into the inlet of the gas discharge passage 511, the insertion of the insertion portion may be hindered by the connecting member 530. Therefore, it may be preferable that the connecting member 530 be positioned between the pipe walls of the first and second pipes under the inlet portion of the first pipe 510. However, as in the embodiment of FIG. 11 to be described below, when a slot A is formed in the insertion portion to be fitted into the connecting member 530, the connecting member 530 may be installed near the inlet of the gas discharge passage 511.

The first stopper 410 for sealing the gas discharge passage 511 is detachably coupled to the upper open portion of the first pipe 510.

When the first stopper 410 is coupled to the first pipe 510, gas discharge is not performed, and when the first stopper 410 is uncoupled from the first pipe 510, the gas discharge passage 511 may be opened so that gas is discharged from the inside of the battery to the outside.

The first stopper 410 may include at least one of a sealing portion for covering the inlet of the gas discharge passage 511 and the insertion portion inserted into the inlet.

In other words, as illustrated in FIG. 8, the first stopper 410 may be a stopper with a sealing portion that fully covers and seals the inlet of the gas discharge passage 511. An inner circumferential surface of the first stopper 410 is coupled by being fitted onto an outer circumferential surface of the first pipe 510 (gas discharge passage 511). In this case, an inner diameter of the first stopper 410 may be formed to be smaller than an outer diameter of the first pipe 510 to forcibly fit the sealing portion of the first stopper 410 onto the inlet portion of the first pipe 510 so that the first stopper 410 may reliably seal the gas discharge passage 511.

Alternatively, the first stopper 410 may be a stopper having an insertion portion that is coupled by being fitted into the inlet of the gas discharge passage 511. In this case, an outer circumferential surface of the insertion portion of the first stopper 410 is coupled by being fitted into the inner circumferential surface of the first pipe 510 (gas discharge passage 511). An outer diameter of the insertion portion of the first stopper 410 may be formed to be greater than an inner diameter of the first pipe 510 to forcibly fit the sealing portion of the first stopper 410 into the inlet portion of the first pipe 510 so that the first stopper 410 may reliably seal the gas discharge passage 511.

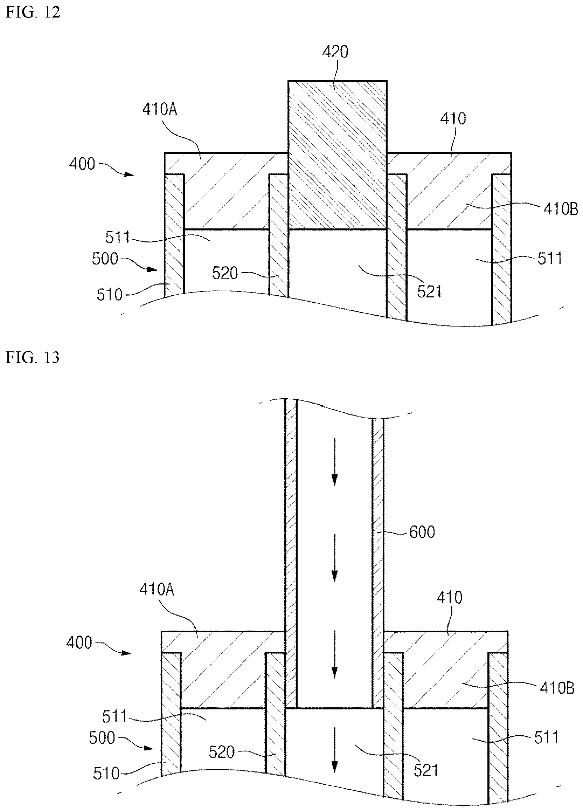

In addition, the first stopper 410 may have a form in which both the sealing portion and insertion portion are provided. In this case, the sealing portion covers the outer circumferential surface of the first pipe or is fitted onto the outer circumferential surface thereof, and the insertion portion is fitted into the inner circumferential surface of the first pipe 510. This type of the first stopper 410 is illustrated in FIG. 12, as will be described below.

In addition, as will be described below, a thread may be formed on a coupling surface of the first stopper 410 and the corresponding coupling surface of the first pipe 510 to screw-couple the first stopper 410 to the gas discharge passage 511 of the first pipe 510.

The second stopper 420 for sealing the electrolyte injection passage 521 is detachably coupled to the upper open portion of the second pipe 520.

When the second stopper 420 is coupled to the second pipe 520, electrolyte injection is not performed, and when the second stopper 420 is uncoupled from the second pipe 520, the electrolyte injection passage 521 may be opened so that the electrolyte is injected into the battery from the electrolyte injection device outside the battery.

The second stopper 420 may include at least one of a sealing portion for covering the inlet of the electrolyte injection passage 521 and an insertion portion inserted into the inlet.

In other words, as illustrated in FIGS. 7 and 8, the second stopper 420 may be a stopper with a sealing portion that fully covers and seals the inlet of the electrolyte injection passage 521. An inner circumferential surface of the second stopper 420 is coupled by being fitted onto the outer circumferential surface of the second pipe 520 (electrolyte injection passage 521). In this case, an inner diameter of the second stopper 420 may be formed to be smaller than an outer diameter of the second pipe 520 to forcibly fit the sealing portion of the second stopper 420 onto an inlet portion of the second pipe 520 so that the second stopper 420 may reliably seal the electrolyte injection passage 521.

Alternatively, the second stopper 420 may be a stopper having an insertion portion that is coupled by being fitted into the inlet of the electrolyte injection passage 521. In this case, an outer circumferential surface of the insertion portion of the second stopper 420 is coupled by being fitted into the inner circumferential surface of the second pipe 520 (electrolyte injection passage 521). An outer diameter of the insertion portion of the second stopper 420 may be formed to be greater than the inner diameter of the second pipe 520 to forcibly fit the sealing portion of the second stopper 420 into the inlet portion of the second pipe 520 so that the second stopper 420 may reliably seal the electrolyte injection passage 521.

In addition, the second stopper 420 may have a form in which both the sealing portion and insertion portion are provided. In this case, the sealing portion covers the outer circumferential surface of the second pipe or is fitted onto the outer circumferential surface thereof, and the insertion portion is fitted into the inner circumferential surface of the second pipe 520.

In addition, as will be described below, a thread may be formed on a coupling surface of the second stopper 420 and the corresponding coupling surface of the second pipe 520 to screw-couple the second stopper 420 to the electrolyte injection passage 521 of the second pipe 520.

According to the present invention, by providing the first stopper 410 coupled to the gas discharge passage 511 of the first pipe 510 and the second stopper 420 coupled to the electrolyte injection passage 521 of the second pipe 520, it is possible to conveniently perform at least one of the gas discharge and electrolyte injection operations. In other words, by coupling and uncoupling at least one of the first stopper 410 and the second stopper 420 to and from each of the corresponding passages, at least one operation of discharging gas from the battery and injecting the electrolyte into the battery may be performed. For example, when gas discharge and electrolyte injection are not required in the operations before and after the activation process, the first stopper 410 may be coupled to the gas discharge passage 511 and the second stopper 420 may be coupled to the electrolyte injection passage 521 to close each passage.

When any one operation of discharging gas and injecting the electrolyte is performed, the corresponding operation may be performed by uncoupling one of the first stopper 410 and the second stopper 420 from the corresponding passage. For example, as illustrated in FIG. 9, in a state in which the second stopper 420 is coupled to the second pipe 520, by uncoupling the first stopper 410 from the first pipe 510, gas may be discharged from the battery to the outside of the battery through the gas discharge passage 511 of the first pipe 510. In this case, since the electrolyte injection passage 521 is sealed by the second stopper 420, it is possible to prevent the leakage of the electrolyte. Conversely, the electrolyte may be introduced into the battery while gas discharge is prevented by sealing the first stopper 410 and uncoupling the second stopper 420 from the second pipe 520.

In addition, when both the first and second stoppers are uncoupled, gas discharge through the gas discharge passage 511 and electrolyte injection through the electrolyte injection passage 521 may be performed simultaneously. In this case, there is an advantage in that the electrolyte is easily injected into the battery as the internal pressure of the battery is reduced by gas discharge.

The first and second stoppers may have shapes that match shapes of the corresponding passages.

The first stopper 410 and the second stopper 420 may be detachably coupled. As illustrated in FIGS. 7 and 8, the first stopper 410 may include a second stopper coupling through hole 411, and the second stopper 420 may be coupled to the first stopper 410 by being inserted into the second stopper coupling through hole 411. In other words, since the second pipe 520 is disposed in the gas discharge passage 511 of the first pipe 510, the second stopper 420 may also be coupled to the second pipe 520 positioned in the gas discharge passage 511 through the second stopper coupling through hole 411 formed in the first stopper 410. In addition, since the first stopper 410 and the second stopper 420 may be coupled, it is convenient to transport the stoppers and it is possible to address the risk of losing a specific stopper. In addition, both stoppers may be coupled to the gas discharge pipe 500 at one time in a state in which the first and second stoppers are coupled, making it convenient to couple the gas discharge pipe 500 to the first and second stoppers. In addition, since the first and second stoppers are detachably coupled, for example, the gas discharge or electrolyte injection operation may be selectively performed by separating the other stopper from the corresponding pipe in a state in which at least one of the first and second stoppers is coupled to the first pipe 510 or the second pipe 520.

### (Second embodiment)

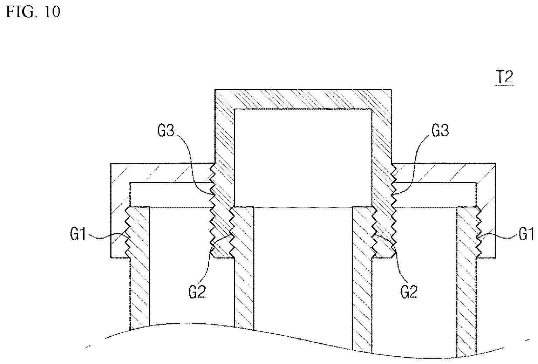

FIG. 10 is a cross-sectional view illustrating a gas discharge and electrolyte injection device T2 according to another embodiment of the present invention.

In the present embodiment, threads G1, G2, and G3 are formed on coupling surfaces where the first stopper 410 and the first pipe 510 are coupled, coupling surfaces where the second stopper 420 and the second pipe 520 are coupled, and coupling surfaces where the first and second stoppers are coupled.

Specifically, threads G3 engaging with each other are formed on an outer surface of the second stopper 420 and an inner surface of the second stopper 420 coupling through hole 411. In addition, threads G1 engaging with each other are formed on the coupling surface of the first stopper 410 (inner circumferential surface of the first stopper 410 in FIG. 10) and the corresponding coupling surface of the upper open portion of the first pipe 510 (outer circumferential surface of the first pipe 510 in FIG. 10). In addition, threads G2 engaging with each other may be formed on the coupling surface of the second stopper 420 (inner circumferential surface of the second stopper 420 in FIG. 10) and the corresponding coupling surface of the upper open portion of the second pipe 520 (outer circumferential surface of the second pipe 520 in FIG. 10).

According to this embodiment, for example, a stopper assembly may be firmly screw-coupled to the gas discharge pipe 500 by rotating the stopper assembly in a state in which the stopper assembly in which the first and second stoppers are coupled is brought into contact with the corresponding coupling surfaces of the first and second pipes at the same time. By the firm screw-coupling, it is possible to further improve the airtightness of the gas discharge and electrolyte injection device of the present embodiment.

In addition, in this case, since the first stopper 410 may be separated from the first pipe 510 by rotating only the first stopper 410 or the second stopper 420 may be separated from the second pipe 520 by rotating only the second stopper 420 in a state in which the stopper assembly is coupled, it is convenient to selectively perform the gas discharge or electrolyte injection operation.

### (Third embodiment)

FIG. 11 is an exploded view of a gas discharge and electrolyte injection device T3 according to still another embodiment of the present invention, FIG. 12 is a cross-sectional view of the gas discharge and electrolyte injection device according to still another embodiment of the present invention, and FIG. 13 is a schematic diagram illustrating an electrolyte injection process by the gas discharge and electrolyte injection device according to still another embodiment.

In the present embodiment, a double pipe structure of the gas discharge pipe 500 including the first pipe 510 and the second pipe 520 is the same as that of the first embodiment. A stopper 400' of the present embodiment is different from that of the first embodiment in terms of the structures of the first stopper 410 and the second stopper 420.

First, the first stopper 410 of the present embodiment includes both a sealing portion 410A for covering the inlet of the gas discharge passage 511 and an insertion portion 410B that is inserted into the inlet. In other words, the first stopper 410 includes the sealing portion 410A for covering an upper portion of the inlet of the first pipe 510 to maintain the airtightness of the first pipe 510. In addition, the first stopper 410 includes the insertion portion 410B inserted into the gas discharge passage 511 of the first pipe 510. Therefore, the airtightness of the gas discharge passage 511 can be reliably ensured by the sealing portion 410A and the insertion portion 410B of the first stopper 410.

In addition, the insertion portion 410B includes a plurality of slots A into which the connecting member 530 is inserted at predetermined intervals along a circumference thereof. The connecting member 530 is installed between the first pipe 510 and the second pipe 520, that is, across the gas discharge passage 511 of the first pipe 510. Therefore, the connecting member 530 becomes an obstacle when the insertion portion 410B of the first stopper 410 is inserted into the gas discharge passage 511. In the present embodiment, since the slots into which the connecting member 530 may be inserted are formed along the circumference of the insertion portion 410B, the insertion portion may be coupled by being easily fitted onto the connecting member 530. By coupling the slot A to the connecting member 530, the first stopper 410 may be more firmly coupled to the first pipe 510.

Meanwhile, as in the first embodiment, the second stopper 420 is coupled by being fitted into the inner circumferential surface of the second pipe 520 in the form of an insertion portion rather than covering and sealing the inlet of the second pipe 520. Therefore, a diameter of the second stopper 420 is smaller than the diameter of the second stopper 420 in the first embodiment.

In FIG. 13, it is illustrated that in a state in which the first stopper 410 is coupled to the first pipe 510, the second stopper 420 is uncoupled from the second pipe 520, and an injection pipe 600 of the electrolyte injection device is inserted into the electrolyte injection passage 521 of the second pipe 520. Therefore, for example, when electrolyte replenishment is required in the activation process or when electrolyte injection for impregnation of the electrode assembly before the activation process is performed, the electrolyte may be injected from the outside of the battery into the battery through the second pipe 520.

### (Fourth embodiment)

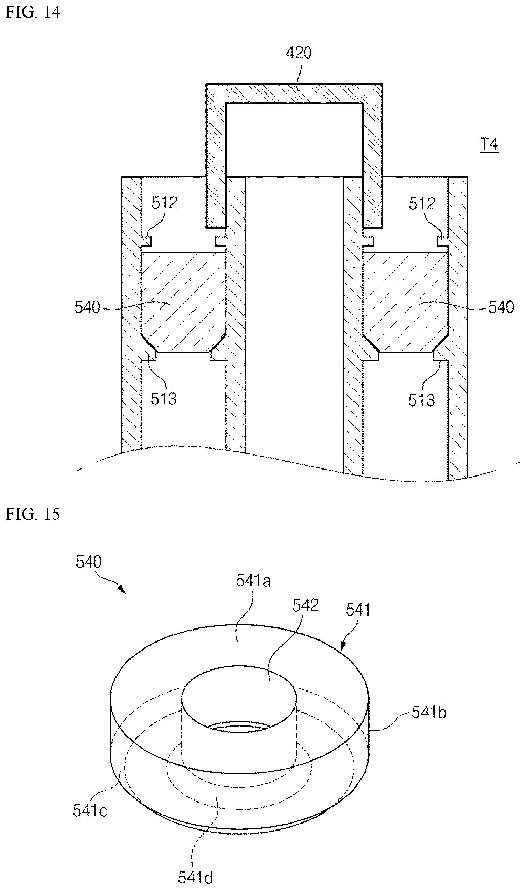

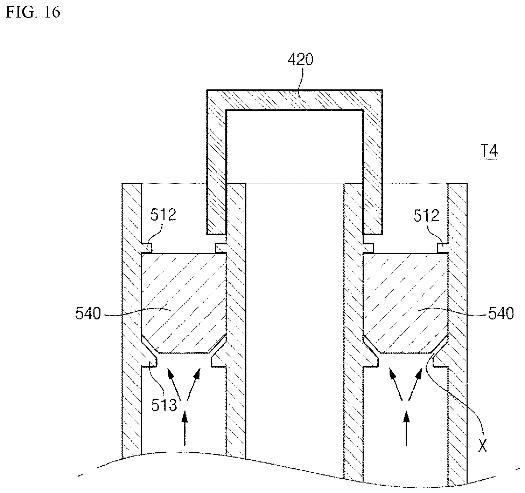

FIG. 14 is a cross-sectional view of a gas discharge and electrolyte injection device T4 according to another embodiment of the present invention, FIG. 15 is a perspective view illustrating an opening/closing member of the gas discharge and electrolyte injection device, and FIG. 16 is a cross-sectional view illustrating an operating process of the gas discharge and electrolyte injection device according to another embodiment of the present invention.

The present embodiment is intended to block the introduction of air and moisture from the outside of the battery when gas is discharged and prevent the leakage of an electrolyte from the inside of the battery.

To this end, the gas discharge and electrolyte injection device T4 of the present embodiment is equipped with an opening and closing mechanism for allowing gas to flow toward only an inlet of the gas discharge passage 511 inside the first pipe 510.

For example, gas discharge may be performed by separating the first stopper 410 from the first pipe 510. In this case, it is assumed that the second stopper 420 is coupled to the second pipe 520 so that no electrolyte injection is performed.

By forming a vacuum atmosphere outside the gas discharge pipe 500, gas may be quickly discharged from the inside to the outside of the battery. In this case, when air or moisture is introduced from the outside of the first pipe 510, not only gas discharge may be hindered, but also the inside of the battery may be contaminated, resulting in product defects. In addition, there is a risk that the electrolyte in the battery leaks through the gas discharge passage 511 due to not only the gas from the inside of the battery but also a difference in pressure between the inside and outside of the battery.

The opening and closing mechanism of the present embodiment may be installed inside the first pipe 510 to allow the gas to flow only in one direction (toward an inlet of the gas discharge passage 511), thereby blocking the introduction of air or moisture from the outside. In addition, since the opening and closing mechanism opens the gas discharge passage 511 just enough to discharge the gas inside the battery, it is possible to prevent the leakage of the electrolyte.

Specifically, the opening and closing mechanism includes an upward movement restriction part 512 and a downward movement restriction part 513 formed to protrude at intervals up and down along the inner circumferential surface of the first pipe 510, and an opening and closing member 540 positioned between the upward movement restriction part 512 and the downward movement restriction part 513.

The upward movement restriction part 512 is a part that protrudes toward a center of the first pipe 510 from the inner circumferential surface of the first pipe 510. When the opening and closing member 540 moves up along the first pipe 510 due to the internal pressure of the battery, the upward movement of the opening and closing member 540 is stopped by coming into contact with the upward movement restriction part 512. The upward movement restriction part 512 may be formed in a ring shape corresponding to a shape of the opening and closing member 540. In other words, the opening and closing member 540 may be a ring-shaped member installed in the first pipe 510 while surrounding the second pipe 520, as will be described below. Therefore, the upward movement restriction part 512 may also be formed to protrude in a ring shape along the inner circumferential surface of the first pipe 510 to restrict the opening and closing member 540 by coming into contact with an upper surface of the opening and closing member 540. However, the upward movement restriction part 512 does not need to continuously form a ring shape along the inner circumferential surface of the first pipe 510, and it may be sufficient to intermittently protrude as long as it has an overall ring shape. Alternatively, when an appropriate number of upward movement restriction parts 512 are installed along the inner circumferential surface of the first pipe 510 to restrict the upward movement of the opening and closing member 540 at a plurality of positions, the upward movement restriction part 512 does not necessarily need to extend in a ring shape.

In addition, other than the inner circumferential surface of the first pipe 510, the upward movement restriction part 512 may be additionally formed along the outer circumferential surface of the second pipe 520. In this case, a pair of the upward movement restriction part 512 formed on the inner circumferential surface of the first pipe 510 and the upward movement restriction part 512 formed on the outer circumferential surface of the second pipe 520 may be formed to more stably restrict the upward movement of the opening and closing member 540.

The downward movement restriction part 513 is a part that protrudes toward the center of the first pipe 510 from the inner circumferential surface of the first pipe 510 and is provided on the inner circumferential surface of the first pipe 510 at intervals up and down from the upward movement restriction part. An interval between the upward movement restriction part 512 and the downward movement restriction part 513 is greater than a height of the opening and closing member. Therefore, when the opening and closing member 540 moves up due to the internal pressure of the battery, a predetermined gap may be formed between the opening and closing member 540 and the downward movement restriction part. The gap gradually becomes larger until the opening and closing member comes into contact with the upward movement restriction part 512.

Meanwhile, the opening and closing member 540 is seated on the downward movement restriction part 513 when the internal pressure of the battery is not applied, and the opening and closing member 540 is restricted to no longer descend inside the first pipe by the downward movement restriction part 513.

The downward movement restriction part 513 may be formed in a ring shape corresponding to the shape of the opening and closing member 540. The downward movement restriction part 513 may be formed to protrude in a ring shape along the inner circumferential surface of the first pipe 510 to restrict the opening and closing member 540 by coming into contact with a lower surface of the opening and closing member 540. However, the downward movement restriction part does not need to continuously form a ring shape along the inner circumferential surface of the first pipe 510, and it may be sufficient to intermittently protrude as long as it has an overall ring shape. Alternatively, when an appropriate number of downward movement restriction parts 513 are installed along the inner circumferential surface of the first pipe 510 to restrict the downward movement of the opening and closing member 540 at a plurality of positions, the downward movement restriction part 512 does not necessarily need to extend in a ring shape.

In addition, in addition to the inner circumferential surface of the first pipe 510, the downward movement restriction part 513 may be additionally formed along the outer circumferential surface of the second pipe 520. In this case, a pair of the downward movement restriction part 513 formed on the inner circumferential surface of the first pipe 510 and the downward movement restriction part 513 formed on the outer circumferential surface of the second pipe 520 may be formed to more stably restrict the downward movement of the opening and closing member 540.

As illustrated in FIG. 15, the opening and closing member 540 may be a ring-shaped member including an outer circumferential surface 541 in contact with the inner circumferential surface of the first pipe 510 and an inner circumferential surface 542 in contact with the outer circumferential surface of the second pipe 520. The second pipe 520 is inserted into the opening at the center of the ring of the opening and closing member 540. Therefore, the opening and closing member 540 may be positioned between the pipe wall of the first pipe 510 and the pipe wall of the second pipe 520 and moved up and down along the inner circumferential surface of the first pipe 510 and the outer circumferential surface of the second pipe 520. Since the height of the opening and closing member 540 is smaller than a distance (interval) between the upward movement restriction part 512 and the downward movement restriction part 513, the opening and closing member 540 may move between the upward and downward movement restriction parts as much as a stroke corresponding to a difference between the above distance and the height of the opening and closing member.

The opening and closing member 540 may move between a blocking position at which the downward movement of the gas is blocked by the opening and closing member 540 coming into contact with the downward movement restriction part 513 and an allowable position at which the opening and closing member 540 is spaced apart from the downward movement restriction part 513 by an upward pressure of the gas to allow the upward movement of the gas.

In FIG. 14, the opening and closing member 540 is positioned at the blocking position. In other words, this is a state just before the first stopper is separated from the first pipe 510 and the gas is discharged from the inside of the battery. At this position, the opening and closing member 540 is seated on the downward movement restriction part 513 to prevent air from being introduced from the outside of the battery and also block the discharge of gas inside the battery.

As illustrated in FIG. 16, when gas pressure is applied from the inside of the battery, the opening and closing member moves up, and a gap is formed between the opening and closing member 540 and the downward movement restriction part 513. Through this gap, the gas inside the battery may be discharged to the outside of the battery. The gap gradually becomes larger until the opening and closing member 540 comes into contact with the upward movement restriction part 512. In a state in which the opening and closing member 540 comes into contact with the upward movement restriction part 512, the gap is maximized and the gas inside the battery may be quickly discharged to the outside.

The ring-shaped opening and closing member 540 has an upper ring diameter, which is almost identical to the distance between the pipe wall of the first pipe 510 and the pipe wall of the second pipe, and also, has an upper surface 541a, which is a flat surface, in contact with a lower surface of the upward movement restriction part 512. Therefore, as illustrated in FIG. 14, even when the upward movement restriction part 512 is spaced apart from the opening and closing member 540, no gap is formed between the opening and closing member and the gas discharge passage 511. Therefore, outside air may not flow into the battery. Meanwhile, a circumference of a lower surface of a ring-shaped portion of the opening and closing member 540 is formed to be tapered, and the corresponding contact surface of the downward movement restriction part 513 is also formed to be tapered. At the blocking position, since tapered portions 541c and 541d of the opening and closing member and tapered portions of the downward movement restriction part 513 come into contact with each other to tightly block the gas discharge passage 511, the upward movement of gas from a lower portion of the passage may also be blocked.

At the allowable position as illustrated in FIG. 16, the opening and closing member 540 moves up such that the tapered portions 541c and 541d of the lower portion of the opening and closing member are spaced part from the tapered portions of the downward movement restriction part 513 to form a gap X, and the gas inside the battery may move up through the gap and may be discharged to the outside. However, because the gap is very narrow, it is difficult for the electrolyte inside the battery to move upward through the gap X. Furthermore, even when the electrolyte is introduced into the gap, a body of the opening and closing member 540 occupies almost the overall volume of the gas discharge passage 511, making it extremely difficult for the electrolyte to further move upward. In other words, gas may be discharged through a minute gap between the opening and closing member 540 and the gas discharge passage 511, but the discharge of the electrolyte is prevented. Therefore, according to the present embodiment, only one-directional flow of the gas is allowed, thereby blocking the introduction of outside air and preventing the leakage of the electrolyte through the gas discharge passage 511.

In other words, the opening and closing member can block the introduction of outside air regardless of the blocking position or the allowable position.

### [Secondary battery]

### (First embodiment)

FIG. 4 is a schematic diagram illustrating a secondary battery 1000 according to one embodiment of the present invention.

The present embodiment relates to a secondary battery including the gas discharge and electrolyte injection device T including the gas discharge pipe 500 with the double pipe structure including both the gas discharge passage 511 and the electrolyte injection passage 521, and the first stopper 410 and the second stopper 420 detachably coupled to each passage.

The secondary battery 1000 of the present embodiment includes the electrode assembly 200 including a positive electrode, a negative electrode, and a separator disposed between the positive electrode and the negative electrode, the battery case 100 including the battery part 110 for accommodating the electrode assembly 200 and the gas collection part 120 communicating with the battery part 110, and the gas discharge and electrolyte injection device T installed at at least one side of the battery case 100. Since detailed configurations of the electrode assembly 200 and the battery case 100 have been described in detail in relation to the manufacturing method of the secondary battery, repeated descriptions will be omitted.

The secondary battery of the present embodiment is a secondary battery in the activation process, which includes both the battery part 110 and the gas collection part 120. In other words, the secondary battery is a semi-finished secondary battery at an intermediate stage for facilitating gas discharge and electrolyte injection in the activation process or the degassing process rather than a finished secondary battery. The secondary battery includes the gas discharge and electrolyte injection device T (T1 to T4) including the gas discharge pipe 500 with the double pipe structure and the first and second stoppers described with reference to FIGS. 7 to 16. Specifically, the gas discharge and electrolyte injection device T (T1 to T4) is installed in the battery case 100 so that portions of the first pipe 510 and the second pipe 520 of the gas discharge and electrolyte injection device T (T1 to T4) are inserted into the battery case 100 and the inlet of the gas discharge passage 511 and the inlet of the electrolyte injection passage 521 protrude outward from one side of the battery case 100. As illustrated in FIG. 4, the gas discharge and electrolyte injection device T (T1 to T4) may be sealed along with the battery case 100 and fixed to the battery case 100. In addition, since the secondary battery of the present embodiment may quickly discharge gas in the activation process and the degassing process through the gas discharge pipe 500, it is possible to reduce the size of the gas collection part 120. In addition, the electrolyte may be replenished through the electrolyte injection passage 521 provided in the gas discharge pipe 500. In particular, when the electrolyte is injected through the electrolyte injection passage 521 in the primary sealing operation of the battery case 100, it is possible to reduce the number of sealing processes as described above.

### (Second embodiment)

FIG. 17 is a schematic diagram illustrating a secondary battery 2000 according to another embodiment of the present invention.

The present embodiment relates to a secondary battery including the gas discharge and electrolyte injection device T (T1 to T4) including the gas discharge pipe 500 with the double pipe structure including both the gas discharge passage 511 and the electrolyte injection passage 521 and the first stopper 410 and the second stopper 420 detachably coupled to each passage.

The secondary battery 2000 according to the present embodiment includes the electrode assembly 200 including a positive electrode, a negative electrode, and a separator disposed between the positive electrode and the negative electrode, the battery case 100 for accommodating the electrode assembly 200, and the gas discharge and electrolyte injection device T (T1 to T4) installed at at least one side of the battery case 100.

The secondary battery of the present embodiment is a finished secondary battery in which the electrode assembly 200 is accommodated in the battery case 100 without the gas collection part 120. As illustrated in FIG. 5, the finished secondary battery is manufactured by performing degassing for removing gas from the gas collection part 120, then removing the gas collection part 120, trimming the removed portion, and sealing the trimmed portion.

As described above, gas may be generated by an electrochemical reaction even in a finished secondary battery. In addition, with repeated charging and discharging, the electrolyte evaporates, and thus the electrolyte inside the battery may become depleted or insufficient. In particular, this phenomenon not only occurs in pouch-type secondary batteries, but also commonly occurs in prismatic batteries, cylindrical batteries, or the like. Therefore, in the finished secondary battery, there is a need to discharge gas and inject an electrolyte.

When the gas discharge pipe 500 is installed in the gas collection part 120 to discharge gas in the activation process and the like, the gas discharge pipe 500 is also removed by the removal of the gas collection part 120.

However, instead of immediately sealing the one open side of the battery case 100 from which the gas collection part 120 has been removed, the gas discharge and electrolyte injection device T (T1 to T4) is positioned in the open portion at the one side and sealed. Therefore, it is possible to simultaneously achieve the installation of the gas discharge and electrolyte injection device T (T1 to T4) and the sealing of the battery case 100 by the final sealing process for manufacturing the finished product.

In this case, the gas discharge and electrolyte injection device T (T1 to T4) is installed in the battery case 100 so that portions of the first pipe 510 and the second pipe 520 of the gas discharge and electrolyte injection device T (T1 to T4) are inserted into the battery case 100 and the inlet of the gas discharge passage 511 and the inlet of the electrolyte injection passage 521 protrude outward from the one side of the battery case 100.

Therefore, the secondary battery of the present embodiment is a finished secondary battery that includes the gas discharge and electrolyte injection device T (T1 to T4) unique to the present invention. Accordingly, in the secondary battery 2000 of the present embodiment, for example, the first stopper 410 may be removed and gas may be quickly discharged through the gas discharge pipe 500, if necessary. In addition, in the secondary battery 2000, the second stopper 420 may be removed and the electrolyte may be replenished through the electrolyte injection passage 521 provided in the gas discharge pipe 500, if necessary.

According to the secondary battery of the present embodiment, in addition to pouch-type secondary batteries, gas discharge and electrolyte injection may be performed simultaneously in all types of secondary batteries that generate gas by electrochemical reactions and in which an electrolyte is injected, such as prismatic secondary batteries and cylindrical secondary batteries.

Meanwhile, gas discharge pipe may be installed at at least one side of the battery case. In other words, as illustrated in FIG. 17, the gas discharge pipe may be installed at one side at which the electrode lead is not positioned, but the gas discharge pipe may also be installed at a side at which the electrode lead is positioned. In addition, gas discharge pipes may be installed at a plurality of sides, if necessary.

As described above, the present invention has been described in more detail through the drawings and embodiments. However, since the configurations described in the drawings, embodiments, and the like described in the specification are only one embodiment of the present invention and do not represent the entire technical spirit of the present invention, it should be understood that various equivalents and modifications capable of replacing them at the time of filing this application may be present.

## Claims

1. A method of manufacturing a secondary battery, comprising:
accommodating an electrode assembly in a battery part of a battery case including the battery part and a gas collection part communicating with the battery part and sealing an edge portion of the battery case excluding one side of the gas collection part;
positioning a gas discharge pipe, through which both gas discharge and electrolyte injection are performable, in an open portion of the battery case at the one side, and simultaneously fixing the gas discharge pipe to the battery case and sealing the battery case by sealing the open portion and the gas discharge pipe together; and
discharging gas generated inside a battery to an outside of the battery through the gas discharge pipe when an activation process is performed on the battery including the battery part and the gas collection part.

2. A method of manufacturing a secondary battery, comprising:
accommodating an electrode assembly in a battery part of a battery case including the battery part and a gas collection part communicating with the battery part and positioning a gas discharge pipe with a double pipe structure including a gas discharge passage and an electrolyte injection passage at at least one open side of the gas collection part;
simultaneously fixing the gas discharge pipe to the battery case and sealing the battery case by sealing an entire edge portion of the battery case including the open side; and
discharging gas generated inside a battery to an outside of the battery through the gas discharge pipe when an activation process is performed on the battery including the battery part and the gas collection part.

3. The method of claim 1 or 2, further comprising a degassing operation of discharging the remaining gas in the gas collection part to the outside of the battery through at least one of degassing holes formed in the gas collection part and the gas discharge pipe after the activation process.

4. The method of claim 1 or 2, further comprising additionally replenishing an electrolyte in the battery through the gas discharge pipe in the activation process.

5. The method of claim 1, wherein the gas discharge pipe has a double pipe structure including a gas discharge passage and an electrolyte injection passage.

6. The method of claim 2, wherein the gas discharge pipe includes a first stopper coupled to the gas discharge passage and a second stopper coupled to the electrolyte injection passage, and
at least one operation of discharging gas from the battery and injecting an electrolyte into the battery is performed by coupling and uncoupling at least one of the first stopper and the second stopper to and from each of the corresponding passages.

7. The method of claim 4, wherein the gas discharge pipe includes a first stopper coupled to the gas discharge passage and a second stopper coupled to the electrolyte injection passage, and
at least one operation of discharging gas from the battery and injecting an electrolyte into the battery is performed by coupling and uncoupling at least one of the first stopper and the second stopper to and from each of the corresponding passages.

8. A gas discharge and electrolyte injection device comprising:
a gas discharge pipe including a hollow first pipe formed with a gas discharge passage and having upper and lower open portions, a hollow second pipe formed with an electrolyte injection passage, having upper and lower open portions, and disposed in the gas discharge passage, and a connecting member connecting a pipe wall of the first pipe to a pipe wall of the second pipe;
a first stopper detachably coupled to the upper open portion of the first pipe and configured to seal the gas discharge passage; and
a second stopper detachably coupled to the upper open portion of the second pipe and configured to seal the electrolyte injection passage.

9. The gas discharge and electrolyte injection device of claim 8, wherein the connecting member connects an inner circumferential surface of the first pipe to an outer circumferential surface of the second pipe and is provided as a plurality of connecting members at predetermined intervals along circumferences of the first pipe and the second pipe.

10. The gas discharge and electrolyte injection device of claim 8, wherein the first stopper includes at least one of a sealing portion configured to cover an inlet of the gas discharge passage and an insertion portion inserted into the inlet.

11. The gas discharge and electrolyte injection device of claim 8, wherein the second stopper includes at least one of a sealing portion configured to cover an inlet of the electrolyte injection passage and an insertion portion inserted into the inlet.

12. The gas discharge and electrolyte injection device of claim 9, wherein the first stopper includes a sealing portion configured to cover an inlet of the gas discharge passage and an insertion portion inserted into the inlet, and
a plurality of slots into which the connecting members are inserted are formed at predetermined intervals along a circumference of the insertion portion.

13. The gas discharge and electrolyte injection device of claim 8, wherein the first stopper and the second stopper are detachably coupled to each other.

14. The gas discharge and electrolyte injection device of claim 13, wherein the first stopper includes a second stopper coupling through hole, and
the second stopper is inserted into the second stopper coupling through hole and coupled to the first stopper.

15. The gas discharge and electrolyte injection device of claim 14, wherein threads engaging with each other are formed on an outer surface of the second stopper and an inner surface of the second stopper coupling through hole,
threads engaging with each other are formed on a coupling surface of the first stopper and the corresponding coupling surface of the upper open portion of the first pipe, and
threads engaging with each other are formed on a coupling surface of the second stopper and the corresponding coupling surface of the upper open portion of the second pipe.

16. The gas discharge and electrolyte injection device of claim 8, wherein an opening and closing mechanism configured to allow gas to flow toward only an inlet of the gas discharge passage is installed inside the first pipe.

17. The gas discharge and electrolyte injection device of claim 16, wherein the opening and closing mechanism includes:
an upward movement restriction part and a downward movement restriction part formed to protrude at intervals up and down along the inner circumferential surface of the first pipe; and
an opening and closing member positioned between the upward movement restriction part and the downward movement restriction part, and
the opening and closing member moves between a blocking position at which the downward movement of gas is blocked by the opening and closing member coming into contact with the downward movement restriction part and an allowable position at which the opening and closing member is spaced apart from the downward movement restriction part by an upward pressure of the gas to allow the upward movement of the gas.

18. The gas discharge and electrolyte injection device of claim 17, wherein the opening and closing member is a ring-shaped member including an outer circumferential surface in contact with the inner circumferential surface of the first pipe and an inner circumferential surface in contact with the outer circumferential surface of the second pipe.

19. A secondary battery comprising:
an electrode assembly including a positive electrode, a negative electrode, and a separator disposed between the positive electrode and the negative electrode;
a battery case including a battery part configured to accommodate the electrode assembly and a gas collection part communicating with the battery part; and
the gas discharge and electrolyte injection device of any one of claims 8 to 18 installed at at least one side of the battery case,
wherein the gas discharge and electrolyte injection device is installed in the battery case so that portions of the first pipe and the second pipe are inserted into the battery case and an inlet of the gas discharge passage and an inlet of the electrolyte injection passage protrude outward from one side of the battery case.

20. A secondary battery comprising:
an electrode assembly including a positive electrode, a negative electrode, and a separator disposed between the positive electrode and the negative electrode;
a battery case configured to accommodate the electrode assembly; and
the gas discharge and electrolyte injection device of any one of claims 8 to 18 installed at at least one side of the battery case,
wherein the gas discharge and electrolyte injection device is installed in the battery case so that portions of the first pipe and the second pipe are inserted into the battery case and an inlet of the gas discharge passage and an inlet of the electrolyte injection passage protrude outward from one side of the battery case.
